# EUROPEAN PATENT APPLICATION

(11) **EP 2 977 629 A1**
(43) Date of publication of application: **27.01.2016**
(21) Application number: 14178445.4
(22) Date of filing: 24.07.2014
(51) Int. Cl.: F16C 33/46, F16C 33/38

(54) **Annular bearing structure for reduction drive**

(71) Applicant: Hsu, Ta-Cheng, Taipei City (TW)
(72) Inventor: Hsu, Ta-Cheng, Taipei City (TW)
(74) Representative: Lang, Christian

(57) **Abstract**

An annular bearing structure (30) includes an annular holder (31), multiple rolling elements (33), and a stop ring (32). The annular holder (31) has a first (35) and an opposite second open end (36). Multiple holding slots (34) are circumferentially equally spaced on the annular holder (31) to respectively extend from the first (35) toward the second open end (36) by a predetermined distance. The rolling elements (33) are rotatably confined in the holding slots (34) on the annular holder (31), and the stop ring (32) is fitted to the first open end (35) of the annular holder (31) to prevent the rolling elements (33) from moving out of the holding slots (34) via the first open end (35). The rolling elements (33) respectively have a diameter larger than a thickness of the annular holder (31), allowing the annular holder (31) to be directly mounted around a rotary plate (23) of a reduction drive. With this design, the annular bearing structure (30) can have reduced volume and manufacturing cost compared to the conventional roller bearing (13).

## Description

### FIELD OF THE INVENTION

The present invention relates to an annular bearing structure for reduction drive, and more particularly to an annular bearing structure that has reduced volume and lowered manufacturing cost.

### BACKGROUND OF THE INVENTION

A reduction drive is a power transmission mechanism being applied to apparatuses that do not need a high operational speed but require an increased amount of torque, such as elevators, belt conveyors, hoists, blenders and the like. The demand for reduction drives constantly increases with the industrial development and plant automation.

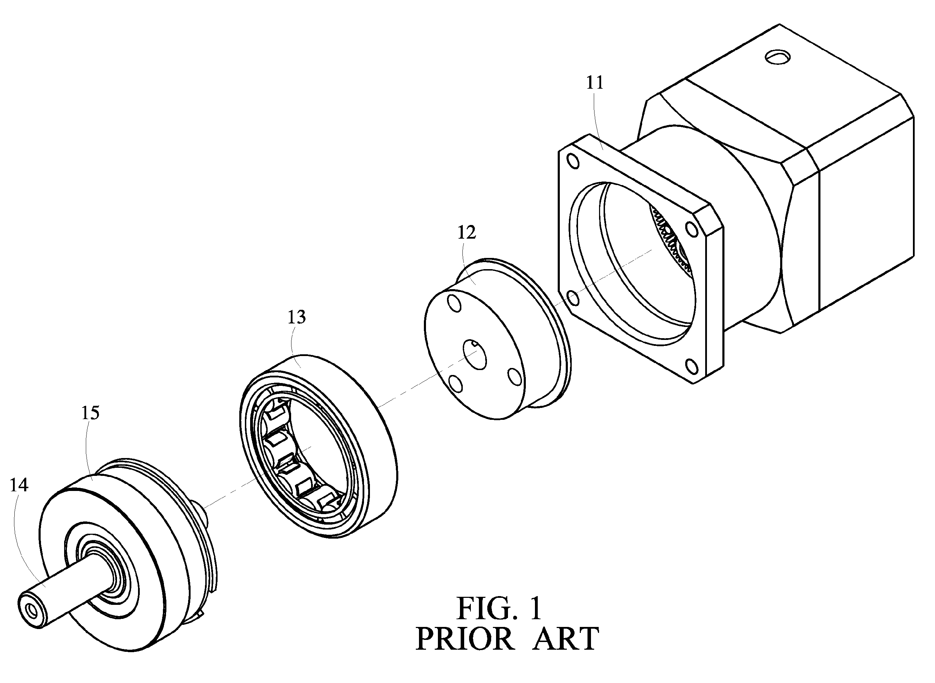

Fig. 1 is an exploded perspective view of a conventional reduction drive, which includes a reduction gear set mounted in a case 11. A power driving device (not shown) is connected to an input end of the case 11, and has an input shaft connected to the reduction gear set, a rotary plate 12 and an output shaft 14 of the reduction drive. A roller bearing 13 is provided between the rotary plate 12 and the case 11, and a cover ring 15 is closed onto an end of the case 11 located adjacent to the output shaft 14, so that the rotary plate 12 and the roller bearing 13 are held in the case 11. The power driving device can be a motor. When the motor is started, the reduction gear set is brought to operate and cause the rotary plate 12 and the output shaft 14 to rotate at reduced rotational speed but increased torque.

The roller bearing 13 advantageously enables the reduction drive to operate stably with reduced rolling resistance thereto. However, from the experiences of using the reduction drive with the roller bearing 13, it is also found that, since the roller bearing 13 requires an inner and an outer bearing ring for holding the rollers in place, an extra space that will be occupied by the roller bearing must be taken into consideration when designing the reduction drive. In addition, the roller bearing 13 involves a complicated and expensive manufacturing process.

### SUMMARY OF THE INVENTION

A primary object of the present invention is to provide an annular bearing structure, which is usable with a reduction drive and has reduced volume and manufacturing cost.

To achieve the above and other objects, the annular bearing structure for reduction drive according to the present invention includes an annular holder mounted around a rotary plate of the reduction drive, a plurality of rolling elements, and a stop ring. The annular holder has a first and an opposite second open end. Multiple holding slots are circumferentially equally spaced on the annular holder to respectively extend from the first toward the second open end by a predetermined distance, which defines a depth of the holding slot. The rolling elements are rotatably fitted in the holding slots on the annular holder, and the stop ring is fitted to the first open end of the annular holder to prevent the rolling elements in rolling from separating from the holding slots. The rolling elements respectively have a diameter larger than a thickness of the annular holder, and the depth of the holding slot is larger than an overall length of the rolling elements fitted therein.

Since the rolling elements respectively have a diameter larger than a thickness of the annular holder, the annular holder has an outermost diameter defined by a circle passing through top points of all the rolling elements and an innermost diameter defined by a circle passing through bottom points of all the rolling elements, allowing the annular holder to be directly mounted around the rotary plate of the reduction drive. When the rotary plate rotates, the rolling elements are brought by the rotary plate to rotate in a rotational direction opposite to that of the rotary plate, so as to reduce the rolling resistance to the rotary plate. With this design, the annular bearing structure of the present invention does not require the outer and inner bearing rings that are needed in the conventional roller bearing, and therefore allows the reduction drive using the present invention to have a reduced volume and be manufactured at reduced cost.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded perspective view showing a conventional reduction drive with a conventional bearing structure;
Fig. 2 is an assembled perspective view of a reduction drive with an annular bearing structure according to the present invention;
Fig. 3 is an exploded view of Fig. 2;
Fig. 4 is a partially sectioned side view of the reduction drive of Fig. 2, showing the mounting of the annular gear structure of the present invention on the reduction drive;
Fig. 5 is an exploded perspective view of a first embodiment of the annular bearing structure according to the present invention; and
Fig. 6 is an exploded perspective view of a second embodiment of the annular bearing structure according to the present invention.

### DETAILED DESCRIPTION OF THE PREFERRED EMBODIMENTS

The present invention will now be described with some preferred embodiments thereof and with reference to the accompanying drawings. For the purpose of easy to understand, elements that are the same in the preferred embodiments are denoted by the same reference numerals.

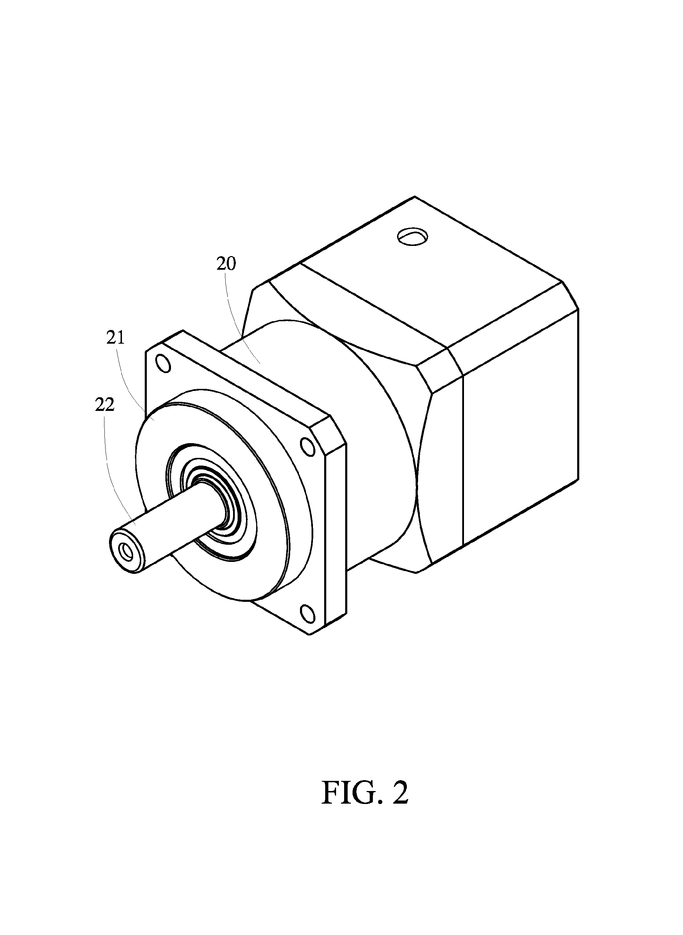

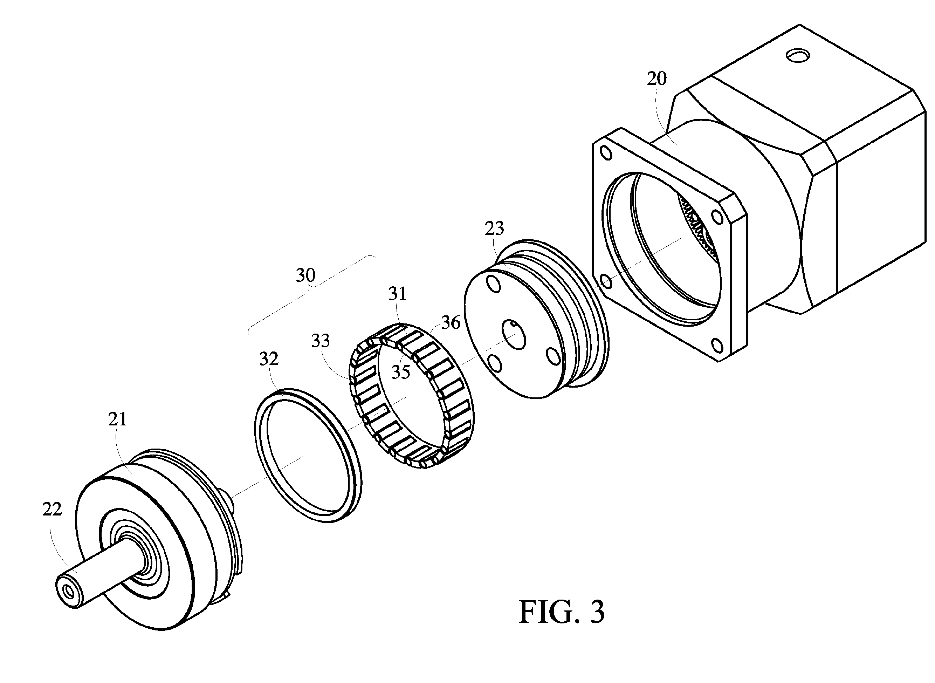

Please refer to Figs. 2 and 3 that are assembled and exploded perspective views, respectively, showing a planetary gear reduction drive with an annular bearing structure 30 according to the present invention. As shown, the reduction drive includes a case 20, in which a reduction gear set (not shown) is mounted. An output-end cover ring 21, an output shaft 22 and a rotary plate 23 are assembled to an output end of the case 20, and an annular bearing structure 30 is mounted between the rotary plate 23 and the case 20. A power driving device (not shown) is connected to an input end of the case 20 and has an input shaft connected to the reduction gear set, the rotary plate 23 and the output shaft 22. The cover ring 21 closes the output end of the case 20, so that the rotary plate 23 and the annular bearing structure 30 are held in the case 20 while the output shaft 22 has an end extended through the rotary plate 23 and the cover ring 21 to project from the case 20.

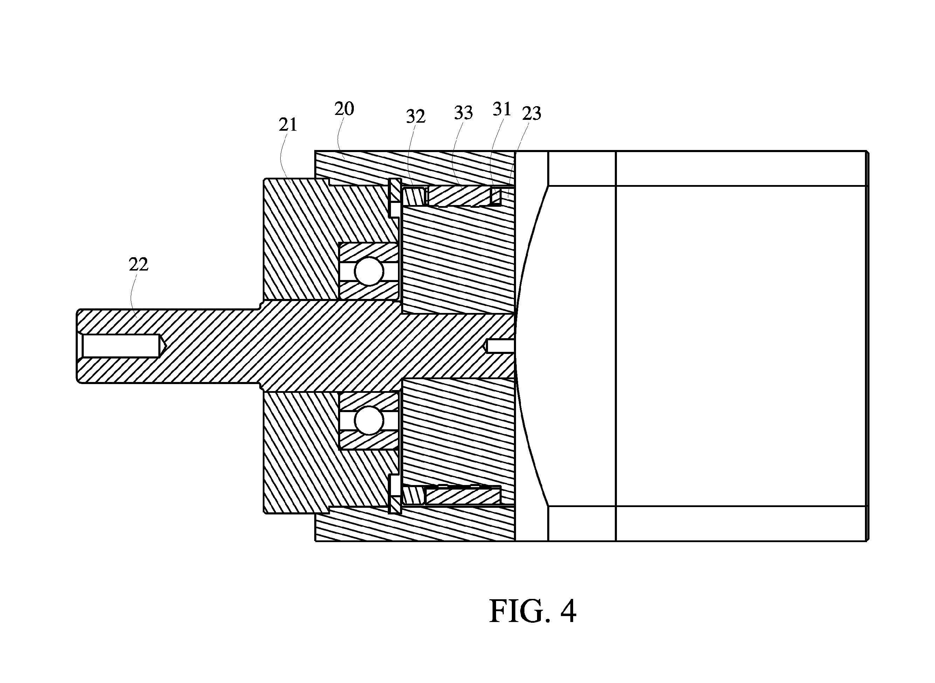

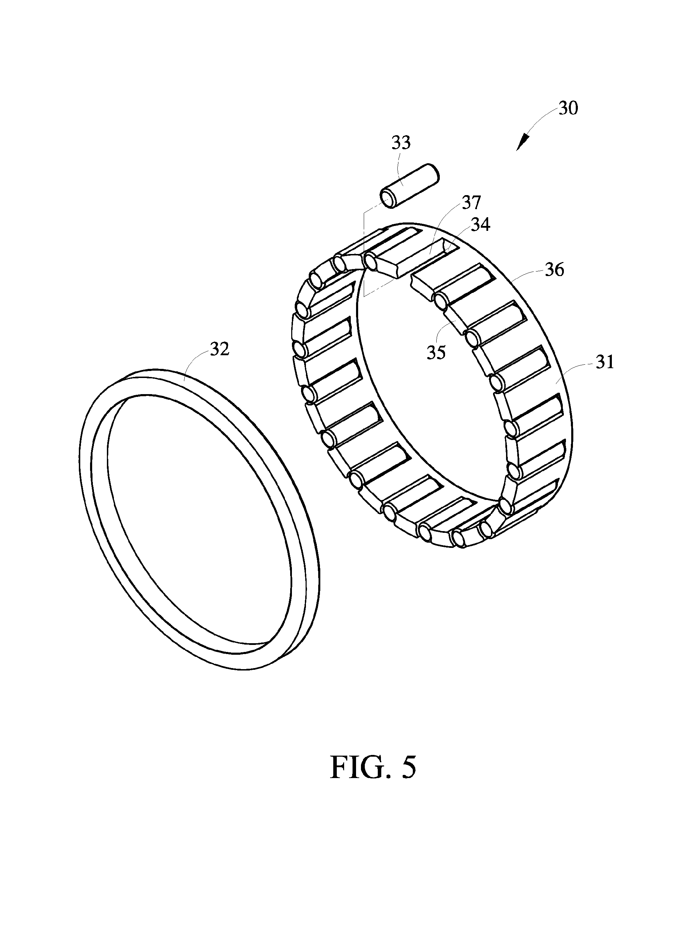

Please refer to Fig. 4 that is a partially sectioned side view showing the mounting of the annular gear structure 30 of the present invention on the reduction drive of Figs. 2 and 3, and to Fig. 5 that is an exploded perspective view of the annular bearing structure 30 according to a first embodiment of the present invention. As shown, in the first embodiment, the annular bearing structure 30 includes an annular holder 31, a stop ring 32, and a plurality of rolling elements 33. The annular holder 31 has a first open end 35, an opposite second open end 36, and a plurality of circumferentially equally spaced holding slots 34. The holding slots 34 are respectively axially extended from the first open end 35 toward the second open end 36 by a predetermined distance, which defines a depth of the holding slot 34 and is slightly larger than an overall length of the rolling elements 33 fitted therein. Each of the holding slots 34 has two lateral sides, which are respectively a curved surface 37. The rolling elements 33 are fitted in the holding slots 34 from the first open end 35 of annular holder 31. A circle defined by a circumferential surface of the rolling element 33 is concentric to a circle defined by the two curved surfaces 37 of the holding slot 34, such that the rolling element 33 is rotatably fitted in the holding slot 34. The stop ring 32 is fitted to the first open end 35 of the annular holder 31 to prevent the rolling elements 33 in rolling from moving out of the holding slots 34 via the first open end 35.

Please refer to Figs. 3 and 4. In the present invention, the power driving device can be a motor. When the motor is started, it brings the reduction gear set in the reduction drive to operate, so that the rotary plate 23 and the output shaft 22 are also caused to rotate at reduced rotational speed but increased torque. As can be seen from Figs. 3, 4 and 5, the annular bearing structure 30 is fitted around the rotary plate 23, and the rolling elements 33 respectively have a diameter larger than a thickness of the annular holder 31. Thus, with the rolling elements 33 fitted in the holding slots 34, the annular holder 31 has an outermost diameter defined by a circle passing through top points of all the rolling elements 33 and an innermost diameter defined by a circle passing through bottom points of all the rolling elements 33. In this case, the rolling elements 33 are in linear contact with the rotary plate 23 and the case 20, as shown in Fig. 4. When the reduction drive operates, the rotary plate 23 rotates in the case 20. At this point, the rolling elements 33 are brought by the rotating rotary plate 23 to rotate in a rotational direction opposite to that of the rotary plate 23. With this design, the reduction drive with the annular bearing structure 30 of the present invention can not only operate stably with reduced operational resistance, but also have smaller volume and lower manufacturing cost compared to other reduction drive that uses a conventional roller bearing 13.

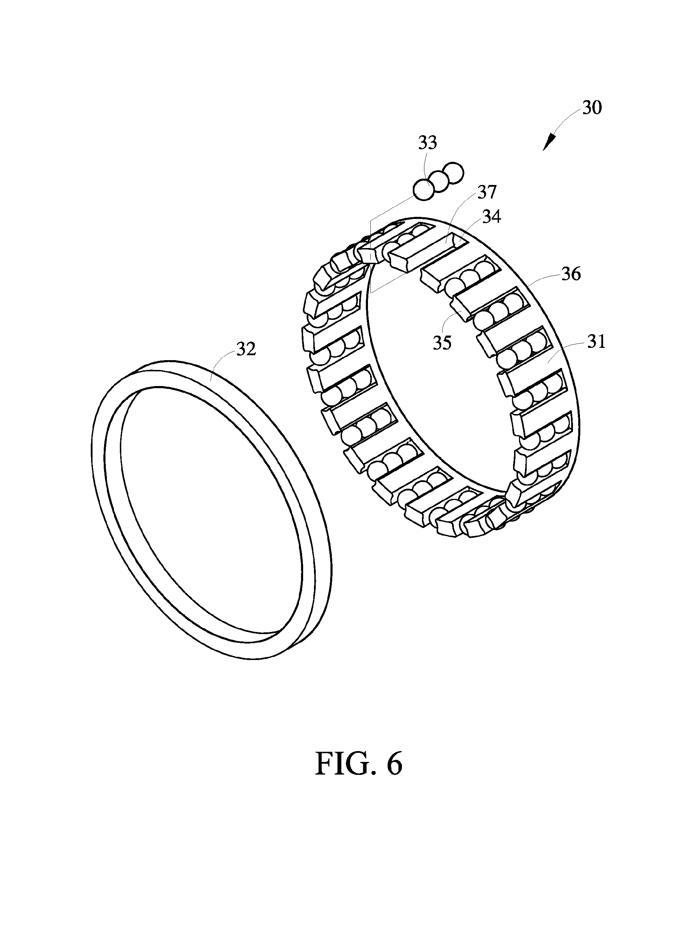

Please refer to Fig. 6 that shows a second embodiment of the annular bearing structure 30 of the present invention. In the first embodiment, the rolling elements 33 are respectively a cylindrical roller and each holding slot 34 on the annular holder 31 has one cylindrical roller fitted therein. However, in the second embodiment, the rolling elements 33 are respectively a ball and each holding slot 34 on the annular holder 31 has at least one ball fitted therein. Again, each of the holding slots 34 has two lateral sides, which are respectively a curved surface 37. A circle defined by a circumferential surface of the ball-shaped rolling element 33 is concentric to a circle defined by the two curved surfaces 37 of the holding slot 34, such that the ball-shaped rolling elements 33 are rotatably fitted in the holding slots 34. The stop ring 32 is fitted to the first open end 35 of the annular holder 31 to prevent the rolling elements 33 in rolling from moving out of the holding slots 34 via the first open end 35.

The present invention has been described with some preferred embodiments thereof and it is understood that many changes and modifications in the described embodiments can be carried out without departing from the scope of the claims that is intended to be limited only by the appended claims.

## Claims

1. An annular bearing structure (30) for reduction drive, comprising:
an annular holder (31) being mounted around a rotary plate (23) of the reduction drive, and having a first open end (35) and an opposite second open end (36); the annular holder (31) having a plurality of holding slots (34) circumferentially equally spaced thereon, and the holding slots (34) being respectively extended from the first open end (35) toward the second open end (36) by a predetermined distance, which defines a depth of the holding slot (34);
a plurality of rolling elements (33) being rotatably fitted in the holding slots (34) on the annular holder (31); and
a stop ring (32) being fitted to the first open end (35) of the annular holder (31) to prevent the rolling elements (33) from moving out of the holding slots (34) via the first open end (35) when the rolling elements (33) are rolling.

2. The annular bearing structure (30) for reduction drive as claimed in claim 1, wherein the rolling elements (33) respectively have a diameter larger than a thickness of the annular holder (31).

3. The annular bearing structure (30) for reduction drive as claimed in claim 1, wherein the rolling elements (33) are respectively in the form of a cylindrical roller.

4. The annular bearing structure (30) for reduction drive as claimed in claim 1, wherein the rolling elements (33) are respectively in the form of a ball.

5. The annular bearing structure (30) for reduction drive as claimed in claim 1, wherein each of the holding slots (34) has two lateral sides, which are respectively a curved surface.

6. The annular bearing structure (30) for reduction drive as claimed in claim 1, wherein the depth of the holding slot (34) is larger than an overall length of the rolling elements (33) fitted in the holding slot (34).
